# EUROPEAN PATENT SPECIFICATION

(11) **EP 0 292 159 B1**
(45) Date of publication and mention of the grant of the patent: **20.07.1994**
(21) Application number: 88304109.7
(22) Date of filing: 06.05.1988
(51) Int. Cl.: G02B 5/122, F21V 13/04

(54) **High aspect ratio light fixture and film for use therein**
Beleuchtungseinrichtung mit grossem Fläche-zu-Dicke-Verhältnis und darin verwendete Folie
Armature d'éclairage avec grand rapport de surface à épaisseur et film pour utilisation là-dedans

(30) Priority: 08.05.1987 US 47644
(43) Date of publication of application: 23.11.1988
(73) Proprietor: MINNESOTA MINING AND MANUFACTURING COMPANY, St. Paul, Minnesota 55133-3427 (US)
(72) Inventor: Cobb, Sanford, Jr. c/o Minnesota Mining and, P.O. Box 33427 St. Paul Minnesota 55133 (US); Dreyer, John F., Jr. c/o Minnesota Mining and, P.O. Box 33427 St. Paul Minnesota 55133 (US)
(74) Representative: Baillie, Iain Cameron

(56) References cited:
- DE-A- 1 125 856
- DE-A- 2 750 828
- DE-U- 1 835 318
- DE-U- 8 034 379
- US-A- 4 498 733

## Description

### Technical Field

The present invention relates to light fixtures and more particularly to light fixtures capable of being manufactured having a very high aspect ratio.

### Background Art

In some applications light fixtures having high aspect ratios, i.e., having length and width which, are much greater than their thickness, are desirable. For example, automotive taillights are preferably designed to be as thin as possible because volume required for such space typically comes at the expense of luggage area.

A high aspect ratio light fixture can be seen in document DE-A-27 50 828. This arrangement uses a lens with prisms on its interior surface. The lamp in this arrangement is positioned immediately behind the lens and therefore the depth of the lens is governed by the length of the lamp and cannot be made any shallower.

Document DE-U-1835318 discloses an arrangement with a lamp positioned to the side. This arrangement is in accordance with the precharacterizing part of Claim 1 below.

### DISCLOSURE OF THE INVENTION

In accordance with the present invention there is provided a high aspect ratio light fixture comprising an enclosure having an optical window, a transparent light extraction film in said optical window and a light source at one end of said enclosure adjacent an edge of said film to provide a beam of light travelling at a narrow angle with respect to the direction normal to said light extraction film wherein said light extraction film has a structured surface facing the interior of said enclosure, and a second surface facing the exterior of said enclosure, said structured surface having a plurality of linear prisms thereon, each of said prisms having first and second sides, said first and second sides making an angle with one another such that light emitted by said light source will enter said prisms, be totally internally reflected and emerge through said second surface, characterized in that the angle between the first and second sides lies in the range of 59 to 79 degrees.

Optional features of the invention are set out in the dependent claims.

### Brief Description of Drawings

Figure 1 is a schematic view of a light fixture according to the invention;
Figure 2 is an expanded view of the light extraction film utilized in the light fixture of Figure 1;
Figure 3 is a schematic view of a light fixture according to an alternative embodiment of the invention; and
Figure 4 is an expanded view of the light extraction file used in tile light fixture of Figure 3.

### Detailed Description

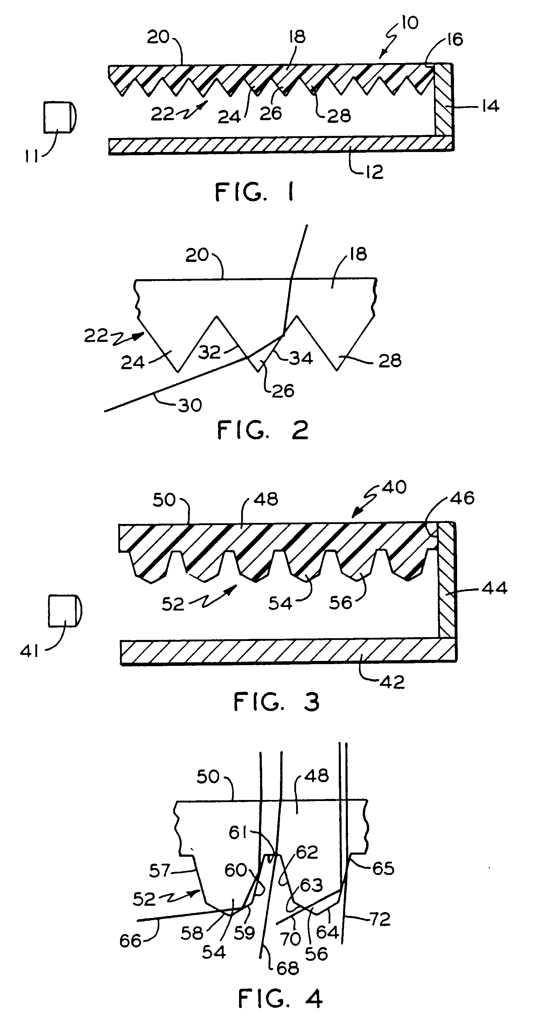

A light fixture of the present invention, designated generally as 10, is shown in Figure 1. Light fixture 10 includes light source 11 and sides 12 and 14. Sides 12 and 14, along with other sides, not shown, form an enclosure having an optical window 16. Light source 11 emits a cone of light in a direction such that the light strikes film 18 at a small angle with respect to the plane of the film. In optical window 16 is a light extractor film 18. Light extractor film 18 has a smooth surface 20 and a structured surface 22. Structured surface 22 has thereon a plurality of linear prisms such as prisms 24, 26, and 28 facing the interior of the enclosure. The axes of prisms 24, 26, and 28 run perpendicular to the direction of light coming from light source 11. In one embodiment sides 12 and 14 are made reflective by using mirrors or a reflective tape such as that sold under the trade name "Silverlux" by Minnesota Mining and Manufacturing Company. Alternatively side 14 could be replaced by an additional light source.

Figure 2 shows an enlargement of a portion of film 18 including prisms 24, 26 and 28. A light beam 30 comes from light source 11 of Figure 1 and impinges on facet 32 of prism 26. Light beam 30 is transmitted by facet 32 and totally internally reflected by facet 34. It then follows the course shown in Figure 2 and emerges through surface 20. Thus, light is extracted from the interior of light fixture 10.

In a preferred embodiment of light fixture 10 the prisms, such as prisms 24, 26 and 28, form isosceles triangles having an angle of 69°. This angle is selected because it causes light traveling at an angle of 15° to the axis of the light fixture to be emitted in a direction normal to that axis. The exact angle selected, however, may vary by as much as five or even ten degrees without significantly affecting the performance of the light fixture. Furthermore, other angles may be selected if other amounts of dispersion are desirable.

Those skilled in the art will readily perceive that it is not required that the structures on structured surface 22 of Figure 1 be triangular. The key aspect to the invention is that light entering from a narrow angle with respect to the plane of the film will be totally internally reflected once an will emerge through surface 20. Figure 3 illustrates and embodiment in which four sided structures are used. In the embodiment of Figure 3, a light fixture 40 has a light source 41, sides 42 and 44, and an optical window 46. Film 48 having a smooth side 50 and a structured side 52, lies in optical window 46. Structured side 52 of film 48 has four sided prisms such as prisms 54 and 56.

Figure 4 shows an enlarged view of the portion of film 48 including prisms 54 and 56. Prism 54 has sides 57, 58, 59 and 60. Facet 61 of film 48 separates prisms 54 and 56 and prism 56 includes facets 62, 63, 64 and 65. In operation, light rays may approach film 48 in a variety of manners. Light ray 66 enters prism 54 through facet 58 and is totally internally reflected by facets 59 and 60 before exiting through surface 50. Light ray 68 enters film 48 through facet 61 and exits through surface 50 without undergoing any reflections. Light ray 70 enters prism 56 through facet 63 and is totally internally reflected by facet 65. It then exits also through surface 50. Finally, light ray 72 enters through facet 65 and exits through surface 50 without undergoing any total internal reflections.

The advantage of the four faceted prisms used in light fixture 40 of Figure 3 lies in their ability to collimate light coming from many directions rather than just the light which enters at a very narrow angle to the plane of the film. Thus, as in the light fixture 10 of Figure 1, sides 42 and 44 could be specularly reflective. Alternatively, however, they could be made diffusely reflective. The light scattered by such diffusely reflective surfaces would still be well collimated by film 48. Furthermore, film 48 could be used in other types of light fixtures where the light approaches the film at angles other than those which would predominate in the light fixture shown in Figure 3. Such a film could even be used to substantially collimate light when the light is approaching the film from all directions.

## Claims

1. A high aspect ratio light fixture (10) comprising an enclosure having an optical window (16), a transparent light extraction film (18) in said optical window (16) and a light source (11) at one end of said enclosure adjacent an edge of said film (18) to provide a beam of light travelling at a narrow angle with respect to the direction normal to said light extraction film (18) wherein said light extraction film (18) has a structured surface (22) facing the interior of said enclosure, and a second surface (20) facing the exterior of said enclosure, said structured surface (22) having a plurality of linear prisms (24, 26, 28) thereon, each of said prisms having first and second sides (32, 34), said first and second sides (32, 34) making an angle with one another such that light emitted by said light source (11) will enter said prisms (24, 26, 28), be totally internally reflected and emerge through said second surface (20), characterized in that the angle between the first and second sides lies in the range of 59 to 79 degrees.

2. A light fixture according to Claim 1 wherein the interior of said enclosure is specularly reflective.

3. A light fixture according to Claim 1 or 2 wherein each of said prisms has a major axis and a cross-section perpendicular to said major axis, said cross-section having two sides (60, 62) extending away from a plane defined by said second surface.

4. A light fixture according to any preceding claim wherein said first and second sides (32, 34) make an angle of approximately 69 degrees with one another.

5. A film according to any preceding claim wherein adjacent prisms (54, 56) are separated by a flat surface (61).

## Patentansprüche

1. Beleuchtungskörper (10) mit großem Fläche-zu-Dicke-Verhältnis, umfassend ein Gehäuse mit einem optischen Fenster (16), eine durchsichtige Lichtgewinnungsfolie (18) in dem optischen Fenster (16) sowie eine Lichtquelle (11) an einem Ende des Gehäuses neben einem Rand der Folie (18), um einen Lichtstrahl zu erzeugen, der unter einem schmalen Winkel in bezug auf die zu der Lichtgewinnungsfolie (18) senkrechte Richtung verläuft, wobei die Lichtgewinnungsfolie (18) eine zum Inneren des Gehäuses weisende strukturierte Oberfläche (22) sowie eine zur Außenseite des Gehäuses weisende zweite Oberfläche (20) besitzt, wobei sich auf der strukturierten Oberfläche (22) eine Vielzahl linearer Prismen (24, 26, 28) befindet und jedes Prisma eine erste und eine zweite Seite (32, 34) besitzt, wobei die erste und die zweite Seite (32, 34) einen Winkel miteinander bilden, so daß von der Lichtquelle (11) ausgesandtes Licht in die Prismen (24, 26, 28) einfallen wird, dort totalreflektiert wird und durch die zweite Fläche (20) wieder austreten wird, dadurch gekennzeichnet, daß der Winkel zwischen der ersten und der zweiten Seite im Bereich von 59 bis 79 Grad liegt.

2. Beleuchtungskörper nach Anspruch 1, bei dem das Innere des Gehäuses spiegelnd reflektierend ist.

3. Beleuchtungskörper nach Anspruch 1 oder 2, bei dem jedes der Prismen eine Hauptachse und einen zu der Hauptachse senkrechten Querschnitt besitzt, wobei der Querschnitt zwei Seiten (60, 62) besitzt, die sich von einer durch die zweite Fläche gebildeten Ebene weg erstrecken.

4. Beleuchtungskörper nach einem der vorhergehenden Ansprüche, bei dem die erste und die zweite Seite (32, 34) einen Winkel von ungefähr 69 Grad miteinander bilden.

5. Folie nach einem der vorhergehenden Ansprüche, bei der aneinandergrenzende Prismen (54, 56) durch eine ebene Fläche (61) getrennt sind.

## Revendications

1. Appareil d'éclairage à rapport d'aspect élevé (10) comprenant une enceinte comportant une fenêtre optique (16), un film d'extraction de lumière transparent (18) dans la fenêtre optique (16) et une source de lumière (11) à une extrémité de ladite enceinte adjacente à un bord du film (18) pour former un faisceau de lumière se propageant suivant un angle étroit par rapport à la direction perpendiculaire au film d'extraction de lumière (18), dans lequel le film d'extraction de lumière (18) comporte une surface structurée (22) orientée vers l'intérieur de l'enceinte et une seconde surface (20) orientée vers l'extérieur de ladite enceinte, la surface structurée (22) comportant une pluralité de prismes linéaires (24, 26, 28), chacun de ces prismes comportant un premier et un second côtés (32, 34), le premier et le second côtés (32, 34) faisant un angle l'un avec l'autre de telle sorte que la lumière émise par la source de lumière (11) entrera par les prismes (24, 26, 28), sera totalement réfléchie intérieurement et sortira par la seconde surface (20), caractérisé en ce que l'angle entre le premier et le second côtés se situe dans la marge de 59 à 79 degrés.

2. Appareil d'éclairage suivant la revendication 1, dans lequel l'intérieur de l'enceinte est réfléchissante spéculairement.

3. Appareil d'éclairage suivant l'une ou l'autre des revendications 1 et 2, dans lequel chacun des prismes précités comporte un axe principal et une section transversale perpendiculaire à cet axe principal, ladite section transversale comportant deux côtés (60, 62) allant en s'écartant d'un plan défini par la seconde surface susdite.

4. Appareil d'éclairage suivant l'une quelconque des revendications précédentes, dans lequel le premier et le second côtés (32, 34) font un angle d'approximativement 69 degrés l'un avec l'autre.

5. Film suivant l'une quelconque des revendications précédentes, dans lequel les prismes adjacents (54, 56) sont séparés par une surface plane (61).
